# EUROPEAN PATENT SPECIFICATION

(11) **EP 1 101 407 B1**
(45) Date of publication and mention of the grant of the patent: **15.03.2006**
(21) Application number: 00204073.1
(22) Date of filing: 17.11.2000
(51) Int. Cl.: A23C 19/032

(54) **Method for preparing a hard or half-hard cheese utilizing extracellular polysaccharide-producing bacteria, and a cheese thus obtained**
Verfahren zur Herstellung eines Hart- oder Halbhartkäses mit extracellulären Polysaccharide-herstellenden Bakterien und derart hergestellter Käse
Procédé de préparation de fromage dur ou semi-dur avec des bactéries produisant des polysaccharides extracellulaires et fromage ainsi obtenu

(30) Priority: 19.11.1999 NL 1013629
(43) Date of publication of application: 23.05.2001
(73) Proprietor: Friesland Brands, 8937 AC Leeuwarden (NL)
(72) Inventor: Bonestroo, Martin Hendrik, 7241 VL Lochem (NL); van Dijck, Willemina Gerharda Frederika Maria, 7415 VD Deventer (NL); van Arem, Everhardus Jacobus Franciscus, 8802 CR Franeker (NL); Hup, Gerhard, 8912 TX Leeuwarden (NL)
(74) Representative: Prins, Adrianus Willem

(56) References cited:
- EP-A- 0 639 332
- HASSAN A N ET AL: "Modification of microstructure and texture of rennet curd by using a capsule-forming non-ropy lactic culture." JOURNAL OF DAIRY RESEARCH 1997 CORRESPONDENCE (REPRINT) ADDRESS, J. F. FRANK, CENT. FOR FOOD SAFETY & QUALITY ENHANCEMENT, DEP. OF FOOD SCI. & TECH., UNIV. OF GEORGIA, ATHENS, GA 30602-7610, U, vol. 64, no. 1, pages 115-121, XP000925734
- LOW D ET AL: "Role of Streptococcus thermophilus MR-1C capsular exopolysaccharide in cheese moisture retention." APPLIED AND ENVIRONMENTAL MICROBIOLOGY 1998 CORRESPONDENCE (REPRINT) ADDRESS, J. R. BROADBENT, DEP. OF NUTR. & FOOD SCI., UTAH STATE UNIV. COLL. OF AGRIC., LOGAN, UT 84322-8700, USA. TEL. (435, vol. 64, no. 6, pages 2147-2151, XP000925639
- PERRY D B ET AL: "Effect of exopolysaccharide-producing cultures on moisture retention in low fat Mozzarella cheese." JOURNAL OF DAIRY SCIENCE 1997 W. DAIRY CENT., UTAH STATE UNIV., LOGAN, UT 84322-8700, USA, vol. 80, no. 5, pages 799-805, XP000657588
- D. PERRY: "Manufacture of low fat mozzarella cheese using exopolysaccharide-producing starter cultures" JOURNAL OF DAIRY SCIENCE, vol. 81, no. 2, 1998, pages 563-566, XP000740336 CHAPAIGN, ILLINOIS US
- PATENT ABSTRACTS OF JAPAN vol. 013, no. 137 (C-582), 5 April 1989 (1989-04-05) & JP 63 301782 A (ZENKOKU NOGYO KYODO KUMIAI RENGOKAI), 8 December 1988 (1988-12-08)
- T. TOBA: "Capsular polysaccharide of slime-forming Lactococcus lactis ssp. cremoris LAPT3001 isolated from Swedish fermented milk "langfil"" INTERNATIONAL JOURNAL OF FOOD MICROBIOLY, vol. 12, no. 2, 1991, pages 167-172, XP000929545

## Description

The present invention relates to a method for the preparation of cheese, and in particular cheese of the hard or half-hard type. In this method, use is made of bacteria that produce extracellular polysaccharide. In addition, the invention concerns cheeses obtainable according to this method. Finally, the invention concerns the use of particular extracellular polysaccharide-producing bacteria for obtaining particular technical effects during the preparation of cheeses of the hard and half-hard type.

More in detail, it has been found, according to the invention, that by means of specific bacterial cultures a structure improvement and/or improvement of the mouthfeel of cheese is obtained, independently of the fat content of that cheese, which effect does not result from moisture binding by the cultures.

In particular, the object of the present invention is to increase the smoothness (Dutch "smedigheid") of cheese without raising the fat content of the cheese nor by binding more moisture.

It is known that a cheese with a smoother structure can be obtained by raising the fat content of the type of cheese in question.

It is also known that a higher moisture content in cheese generally gives a softer consistency and hence a better mouthfeel. Thus, it has been described that raising the moisture content in mozzarella having a low fat content gives an improvement of the body, texture and functional properties (Merill *et al.,* "A method for manufacturing reduced fat mozzarella cheese", J. Dairy Sci. (1994) 77: 1783-1789).

In general, additions that retain moisture can thus contribute to a softer consistency and a better mouthfeel.

Further examples of moisture-retaining additions that are known from the prior art comprise:
- addition of gelatin to reduced-fat cheese, the gelatin imparting a more homogeneous smoother structure in soft, skimmed milk cheeses of the Camembert type (see: EP-A-0 415 832);
- addition of gelatin to low-fat cheese of the hard type (see: WO-A-95/10945);
- consistency improvement in dairy products having a low fat content, including cheese, by partial substitution of milk fat by starch (see: EP-A-0 427 310)
- use of fat replacers in mozzarella for increasing the moisture content and improving the consistency (see: McMahon *et al.,* "Use of fat replacers in low fat mozzarella cheese", J. Dairy Sci. (1996) 79: 1911-1921);
- consistency improvement of cheese having a low fat content by adding thickeners (see: EP-A-0 693 881 and WO-A-95/21534); and
- various additives having an effect on the structure of Cheddar cheese (see: Drake *et al*., "Fat mimetics in low-fat cheddar cheese", J. Food Sci. (1996) 61: 1267-1270).

The additives mentioned in the preceding paragraph are none of them milk-inherent additions to cheese. Such additives are not allowed in cheese pursuant to the Dutch Agricultural Quality Act.

It is also known from the prior art that water binding by addition of exopolysaccharide-producing lactic acid bacteria to cheese is a suitable method of raising the moisture content of cheese. In this light, see Low *et al.* "Role of *Streptococcus thermophilus* MR-1C capsular exopolysaccharide in cheese moisture retention", Appl. Environ. Microbiol. Vol 64 (1998), 2147-2151; and Perry *et al.* "Effect of exopolysaccharide-producing cultures on moisture retention in low-fat mozzarella cheese", J. Dairy Sci. 80, (1997), 799-805. Both articles concern the preparation of a mozzarella cheese having a reduced fat content.

An increase of the moisture content of cheese, however, involves a few risks. The taste may be adversely affected; thus, the taste of cheeses having an increased moisture content may easily change in the direction of acid or bitter.

In a publication on the microstructure and texture of fresh curd for the preparation of cheeses having a low fat content, and in particular mozzarella having a low fat content, it was found that capsule-forming bacteria from non-ropy lactic acid cultures (*Streptococcus thermophilus* strains) produce large pores in the casein network (Hassan and Frank "Modification of microstructure and texture of rennet curd by using a capsule-forming non-ropy lactic culture" J*.* Dairy Res. 64 (1997), 115-121). This mechanism perhaps underlies the increased moisture uptake in mozzarella cheeses prepared utilising extracellular polysaccharide-forming bacteria.

A method of improving - without adverse taste effects - the structure of a cheese of the Gouda type having a reduced fat content is described in European patent application 0 629 349, which is based on Dutch patent application 9301070. According to this application, aggregates of whey proteins are to be used to improve the structure of cheese.

According to the present invention, it has now been found that cheeses having a smoother structure and a better mouthfeel can be prepared, without the fat content being modified and without involving additional moisture binding. To that end, a cheese of the hard of half-hard type is prepared utilising capsular polysaccharide-forming bacteria, which bacteria are killed off.

More in detail, the invention concerns a method for preparing a cheese of the hard or half-hard type, wherein capsular polysaccharide-forming bacteria which bacteria are killed off are introduced into the cheese milk. In a preferred embodiment, the capsular polysaccharide-forming bacteria form at least a part of the starter used.

In addition, the invention concerns a cheese of the hard or half-hard type obtainable utilising the method such as it is described in this description. In particular, this cheese is characterised in that per gram of cheese at least 10⁵ bacteria of said type are present.

Finally, the invention concerns the use of capsular polysaccharide-forming bacteria which have been killed off in the making of cheese of the hard or half-hard type for obtaining a smooth consistency. In this use, preferably no, at least substantially no, additional moisture binding occurs, which follows clearly from the examples following below.

The use of capsular polysaccharide-forming bacteria in the preparation of curd or of a specific type of cheese (mozzarella) has been reported in the art.

The use of a capsule-forming lactic culture to modify microstructure and texture of rennet curd is described in Journal of Daily Research (1997) 64 115 121.

Applied and Environmental Microbiology, June 1998, page 2147-2151 relates to the role of *Streptococcus thermophilus* capsular exopolysaccharide to increase moisture retention in low-fat mozzarella.

In the Journal of Dairy Science Vol 80 (1997), no 5, page 709-805 and Vol 81 (1998), no 2, page 563-566 the use of exopoly saccharide-producing cultures in the preparation of low-fat mozzarella is disclosed.

None of these publications disclose to make use of killed off bacteria.

In the method according to the present invention, use is made of particular extracellular polysaccharide-producing lactic acid bacteria. Particular lactic acid bacteria are capable of producing extracellular polysaccharides. Depending on binding, if any, of these polysaccharides to the bacterial cell, there is involved either slime that is clear of the bacterium (EPS, exopolysaccharide) or a capsule that remains attached to the cell wall of the bacterium (CPS, capsular polysaccharide). For the description of these extracellular polysaccharide-producing bacteria, reference is made to Cerning, J. "Production of exopolysaccharides by lactic acid bacteria and dairy propionic bacteria", Lait 75 (1995) 463-472; and Cerning et *al.* "Isolation and characterization of exopolysaccharides from slime-forming mesophilic lactic acid bacteria", J. Dairy Sci. 75 (1992) 692-699. The contents of these articles are incorporated herein by reference, for the description of the manner of isolating such microorganisms.

In yoghurt, the consistency is partly determined by the EPS formed from *Streptococcus thermophilus* and/or *Lactobacillus bulgaricus* (see: Marshall, V.M. and Rawson, H.L. "Effects of exopolysaccharide-producing strains of thermophilic lactic acid bacteria on the texture of stirred yoghurt", Int. J. Food Sci. & Technol. 34 (1999) 137-143). Formation of EPS is often highly strain-dependent.

Also known from the prior art is the formation of capsular polysaccharide by lactic acid bacteria *(Streptococcus thermophilus, Lactobacillus delbrueckii* ssp. bulgaricus, but also *Lactococcus lactis* ssp. *lactis)* (see in this connection inter alia an article by Hassan, A.N. *et al.* "Observation of encapsulated lactic acid bacteria using confocal scanning laser microscopy", J. Dairy Sci. 78 (1995) 2624-2628). The formation of capsular polysaccharide also proved highly strain-dependent.

Capsule-forming strains of *Lactococcus lactis* ssp *cremoris* have been previously described by Saxelin, M.L. et *al.* "Partial characterization of a new C3-type capsule-dissolving phage of *Streptococcus cremoris",* Can. J. Microbiol. 25 (1979) 1182-1187; and by Toba *et al.* "Capsular polysaccharide of a slime-forming *Lactococcus lactis* ssp. *cremoris* LAPT 3001 isolated from Swedish fermented milk "långfil"", Int. J. Food Microbiol. 12 (1991) 167-172.

Adapa and Schmidt previously described a mixed culture of *Lactococcus lactis* ssp. *lactis, L. lactis* ssp. *cremoris* and *L. lactis* ssp. *lactis* biovar *diacetylactis* ("Physical properties of low-fat sour cream containing exopolysaccharide-producing lactic acid", J. Food Sci. 63 (1998) 901-903).

According to the invention, a cheese of the hard or half-hard type is prepared using particular extracellular polysaccharide-producing cultures, these cultures being selected such that the extracellular polysaccharide is mainly present in the form of a capsule attached to the cell wall (CPS, capsular polysaccharide) and not dissociated from the bacterial cells (EPS, extracellular polysaccharide). In other words, according to the invention, those bacteria suitable for cheese making are used that form substantially exclusively capsular polysaccharide, at least form a sufficiently thick polysaccharide capsule around them for the individual bacteria in the capsule to start to behave, so to say, as a fat globule in the cheese.

The presence of CPS can be demonstrated microscopically using a stain with Indian ink in combination with phase-contrast microscopy. Capsules around bacteria are visible in the preparation as a clear zone around the bacterium, against a brown-black background with particles of Indian ink (Duguid staining method, see Murray, R.G.E., Doetsch, R.N. and Robinow, C.F. (1994) Determinative and cytological light microscopy. In: Methods for general and molecular bacteriology. P. Gerhardt (Ed.) American Society for Microbiology, Washington, p. 34).

Another method of demonstrating capsular polysaccharide is "confocal scanning laser microscopy" (CSLM, see Hassan, A.N. et al (1995) Observation of encapsulated lactic acid bacteria using confocal scanning laser microscopy. J. Dairy Sci. 78: 2624-2628).

Isolation and characterisation of bacterial EPS (or CPS) can be carried out utilising conventional (physicochemical) methods. See in this connection: Van Marle en Zoon, (1995) Neth. Milk Dairy J. 49, 47-65; and Tuinier et *al.* (1999) Biopolymers 49, 1.

The use of substantially EPS-forming cultures, due to the effect of moisture binding, yields cheese of a soft and often somewhat sticky consistency. However, when substantially CPS-forming cultures are employed, cheese having a better structure, which is creamier and smoother, with a firmer, less sticky body is obtained. This effect of CPS-forming bacteria is also observed when the moisture content is not increased or hardly so.

The role of EPS in low-fat cheese has already been extensively studied. Transition of the EPS formed by the culture to the curd is here of crucial importance. Thus, it has been found, inter alia, that addition of non-acidifying EPS-forming *S*. *thermophilus* cultures can increase the moisture of Gouda cheese and can improve the coherence of cheese.

According to the invention, the use of CPS forming (mesophilic) cultures in cheese making gives a clear improvement of the consistency (pliant structure, smooth mouthfeel), without appreciable increase of the moisture content, entirely independently of the fat content, and especially: without adversely affecting the taste.

The thickness of the CPS layer then seems to be of importance. Theoretically, a bacterial cell (about 1 µm in diameter) surrounded by a polysaccharide capsule having a layer thickness of at least 0.5 and preferably about 1 µm could behave like a fat globule (about 3 µm in diameter), which can improve the consistency of cheese. Without wishing to be bound to this theory, this finding is substantiated in that it has been found that for the action of CPS-producing bacteria, it is not necessary that these bacteria live. Thus, the CPS bacteria can be subjected to all kinds of preserving techniques such as a high pressure treatment, a pulsed field treatment, or a temperature treatment such as sterilisation or pasteurisation. Thus, for instance, after the culturing phase, the culture of CPS cultures, or the CPS bacteria as such, optionally after dilution with milk, can be heated, for instance to pasteurisation temperature, and subsequently be added to the cheese milk. In this case, too, from this cheese milk a cheese with a smoother consistency is formed. This is the same effect as upon the addition of living CPS cultures. An advantage of this manner of addition is that the conventional cheese making is not hindered by the presence of a large amount of organisms possibly or potentially having a disturbing influence on the usual cheese making process.

Incidentally, the polysaccharide that is secreted into the cheese milk by the EPS-producing organisms proves to be separated off for an important part along with the whey. By contrast, the capsular polysaccharide remains with the bacteria in the curd.

Bacterial strains to be suitably used according to the invention can be recovered, for instance, from thermophilic or mesophilic cultures known for the making of cheese of the hard or half-hard type, such as Cheddar and Gouda. For the isolation of EPS- and CPS-forming strains from conventional (mesophilic or thermophilic) cheese starters, the starters are cultured in milk according to conventional procedures. After plating onto Plate Count Agar and incubation at optimum temperature, slime-forming colonies (ropy colonies) are selected. These are subsequently cultured in milk and examined for CPS formation with the above-described microscopic staining method of Duguid. The strains to be used most preferably secrete substantially no polysaccharide into the milk medium. Incidentally, polysaccharide in milk can be demonstrated by precipitating the bacteria through centrifugation and subsequently examining the supernatant for polysaccharides. Suitable strains consist of bacteria that form a thick capsule layer of a layer thickness in the order of at least 0.5 micrometer, and preferably at least 0.8 micrometer, and can subsequently be preserved in the usual manner at low temperature (< -80°C) and be employed according to need. One strain suitable for the invention, *Lactococcus lactis ssp. cremoris* strain CR381, was deposited under the Budapest Treaty with the Centraal Bureau voor Schimmelcultures at Baarn, Netherlands, on November 16, 1999 under number CBS 102351.

An important factor in cheese making according to the present invention is the number of cells of CPS-forming cultures that are added to cheese (in that connection, see series III in the Examples). It has been found that in order to accomplish a sufficient extent of the effect found according to the invention, at least 0.2% by weight of the CPS culture, based on the weight of the cheese milk, is to be added to the cheese milk. Preferably, the CPS culture is used in an amount between 0.4 and 5% by weight, more preferably between 0.5 and 3% by weight.

In the starter used in the cheese making, partial use is made of a conventional thermophilic or mesophilic starter, preferably a conventional mesophilic starter. This starter conventional in the making of cheeses of the hard and half-hard type is used in the conventional amount of about 0.5 to 1% by weight, based on the cheese milk, in addition to the CPS starter.

The following examples are for illustrative purposes only. Example 1 Preparation of 30⁺ cheese of the Gouda type with EPS- and CPS-forming cultures

For the preparation of a batch of cheese, the starting material was 400 litres of partially skimmed milk, which had been standardised to a fat content of 1.7% by weight and a protein content of 3.4% by weight, based on the weight of the cheese milk. For making cheese, the cheese milk was conventionally pasteurised at 74°C and cooled back to the renneting temperature of 31°C.

Next, there were added to the cheese milk: active mesophilic starter (type Bos, obtainable from CSK Food Enrichment B.V. at Leeuwarden) or the respective EPS- or CPS-forming cultures, 60 grams of a 35% aqueous calcium chloride solution, 0.5 ml of a commercial preparation annatto cheese colouring (CSK Food Enrichment B.V.) and 20 grams of a rennet preparation marketed by CSK Food Enrichment B.V. (amounts per 100 litres of cheese milk).

The EPS- and CPS-forming cultures had been isolated from various sources (inter alia mesophilic cheese starters and slime-forming starters; for a more detailed indication, see Table 1) and examined for polysaccharide formation. More in particular, for the isolation of EPS- and CPS-forming strains from conventional (mesophilic or thermophilic) cheese starters, these starters were cultured in milk (according to conventional procedures). After plating onto Plate Count Agar and incubation at optimum temperature, slime-forming colonies (ropy colonies) were selected, subsequently cultured in milk and examined for CPS formation with the microscopic method (see below). Strains were subsequently preserved at low temperature (< -80°C) .

The CPS-forming cultures were then distinguished by staining with Indian ink according to the procedure as described in the above description.

Renneting of the milk and cutting and processing of the curd obtained were carried out according to the generally known method for making Gouda cheese. After draining a portion of the cheese whey, there was added to the residual portion 40% curd-washing water of a temperature such that the whey-curd mixture obtained a temperature of 33°C.

After a total processing time of 75 minutes, the curd mass was drained and filled into cheese vats. The cheeses obtained (about 8 kg each) were, after a conventional pressing program, brined for 48 hours in a conventional brine basin.

Thereafter the cheeses were stored on shelves in a cheese store at a temperature of 12-14°C and provided in a known manner with a number of layers of cheese coating agent.

At an age of 14 days, of each vat a cheese was sampled for composition (moisture content [wt.%], fat content based on the dry matter [wt.%], salt content based on the dry matter [wt.%], and pH).

At an age of 6 weeks, the cheeses were evaluated for taste and consistency.

**Table 1. Preparation of 30⁺ cheese with Bos culture (reference), EPS-forming cultures Lactococcus lactis NIZO B891 and NIZO B40 (comparative examples, strains obtainable from cultures of the NIZO, Ede, Netherlands; see: Van Kranenburg, R. et al. (1997) Mol. Microbiol., 24, 387) and CPS-forming culture L. lactis subsp. cremoris CR383.**

| Vat number | 1 | 2 | 3 | 4 |
|---|---|---|---|---|
| Acidifying culture | 0.6 % BOS | 1 % B891 | 2 % B40 | 0,7 % CR383 |
| Additional culture | - | - | - | - |
| amount of formed polysaccharide (mg/l) in cheese (2 weeks) | 50 | 147 | 201 | 40 |
| Composition cheese (2 weeks) | | | | |
| Moisture content (%) | 50.4 | 51.8 | 52.6 | 49.9 |
| Fat content on dm (%) | 33.5 | 33.2 | 32.5 | 32.9 |
| Salt content on dm (%) | 3.0 | 3.2 | 3.5 | 2.8 |
| pH | 5.28 | 5.17 | 5.17 | 5.23 |
| Inspection at 6 weeks | | | | |
| Taste | Good | Acid, nasty | Bitter, acid | Good |
| Consistency | Good | Short, sticky | Short, sticky | Smooth |

As appears from the Table, through the addition of EPS-forming cultures *L*. *lactis* B891 and B40, cheeses having a clearly increased moisture content were obtained. The taste of the cheeses was adversely affected by the use of the cultures *L*. *lactis* B891 and B40. The consistency of the cheeses with these cultures was considerably poorer than that of the reference. The cheese with culture *L*. *lactis* subsp. *cremoris* CR383, by contrast, did not have an increased moisture content, had a good taste and, compared with the reference, a clearly improved, smoother consistency.

### Example 2 Preparation of 48⁺ cheese with EPS- and CPS-forming cultures.

The method according to Example 1 was repeated, with cheese milk being standardised to a fat content of 3.5% by weight and a protein content of 3.4% by weight, based on the weight of the cheese milk. To the cheese milk were added active mesophilic starter (CSK Food Enrichment B.V.) and optionally an amount of EPS- or CPS-forming cultures (see Table 2). Further, the cheese milk was further processed in a manner conventional for 48⁺ cheese to obtain 48⁺ cheese.

At an age of 14 days, of each vat a cheese was sampled for composition (moisture content [wt.%], fat content based on the dry matter [wt.%], salt content based on the dry matter [wt.%], and pH).

At an age of 6 weeks, cheeses were inspected for taste and consistency.

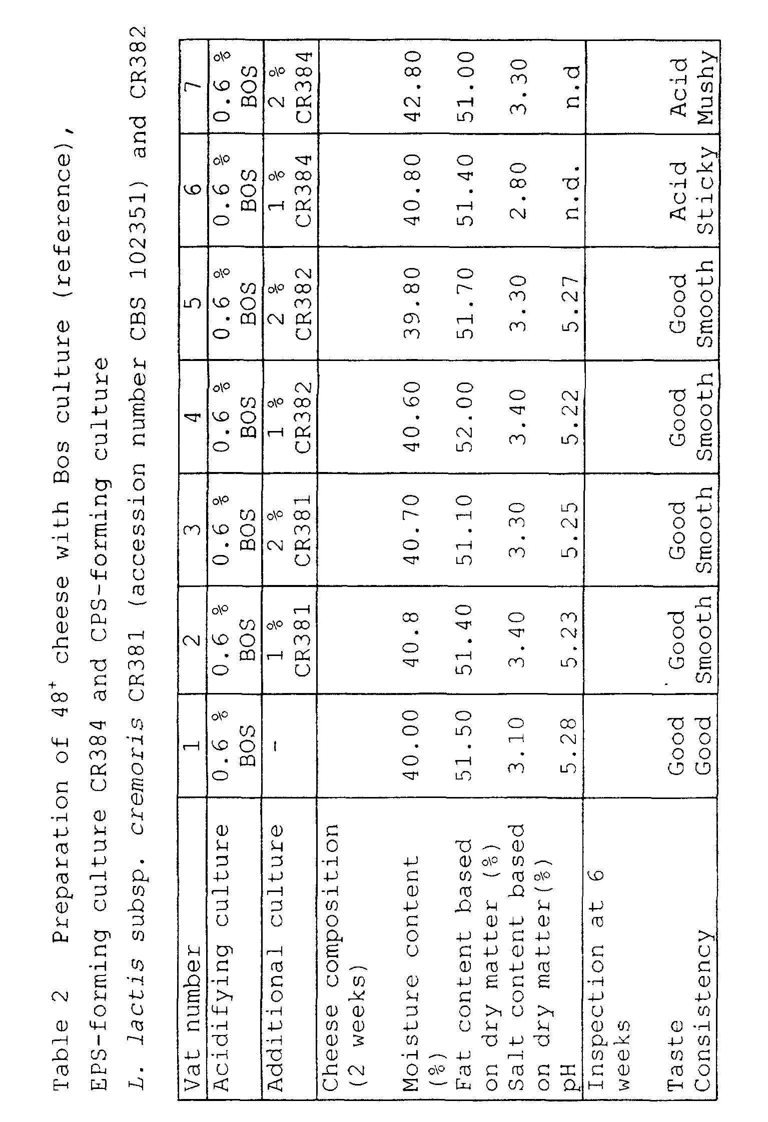

As appears from the Table, through the addition of 2% EPS-forming culture *L. lactis* CR384, cheese having a clearly increased moisture content was obtained. The taste of the cheese was adversely affected by the use of the culture *L. lactis* CR384. The consistency of the cheeses with this culture was considerably poorer than that of the reference (sticky, and even mushy at high dosage). The cheeses with culture *L. lactis* subsp. *cremoris* CR381 and CR382, by contrast, had a good taste and, compared with the reference, a clearly improved, smoother consistency. The smooth consistency in comparison with the reference is greater than may be expected from the small differences in moisture content (and fat content).

## Claims

1. A method for preparing a cheese of the hard or half-hard type, wherein capsular polysaccharide-forming bacteria, which bacteria are killed off, are introduced into the cheese milk.

2. A method according to claim 1, wherein the starter used is based on a mesophilic starter conventional for the cheese of the hard or half-hard type.

3. A method according to any one of the preceding claims, wherein the capsular polysaccharide-forming bacteria are added to the cheese milk in an amount of at least 0.2% by weight, preferably in an amount of between 0.4 and 5% by weight, based on the cheese milk.

4. A method according to any one of the preceding claims, wherein the capsular polysaccharide-forming bacteria are surrounded by a layer of polysaccharide, as determined with an Indian ink stain, of a thickness of at least 0.5 micrometer.

5. A method according to any one of the preceding claims, wherein, as capsular polysaccharide-forming bacteria, lactic acid bacteria capable of producing extracellular polysaccharides are used.

6. A method according to claim 5, wherein bacteria of the strain *Lactococcus lactis ssp. cremoris* CR381 as deposited under number CBS 102351 are used.

7. A method according to any one of the preceding claims, for preparing Gouda type cheese.

8. A cheese of the hard or half-hard type, obtainable by the method according to any one of claims 1-7.

9. Use of capsular polysaccharide-forming bacteria which have been killed off in the making of cheese of the hard or half-hard type for obtaining a smooth consistency.

10. Use according to claim 9, without additional moisture binding thereby occurring.

## Patentansprüche

1. Verfahren zur Herstellung eines Hart- oder Halbhartkäses, worin Kapselpolysaccharid-bildende Bakterien, welche Bakterien abgetötet werden, in die Käsemilch eingebracht werden.

2. Verfahren gemäß Anspruch 1, worin der verwendete Starter auf einem für Halb- oder Halbhartkäse üblichen mesophilen Starter basiert.

3. Verfahren gemäß einem der vorangehenden Ansprüche, worin die Kapselpolysaccharid-bildenden Bakterien zur Käsemilch in einer Menge von mindestens 0,2 Gew.%, vorzugsweise in einer Menge zwischen 0,4 und 5 Gew.%, auf Basis der Käsemilch gegeben werden.

4. Verfahren gemäß einem der vorangehenden Ansprüche, worin die Kapselpolysaccharid-bildenden Bakterien durch eine Schicht aus Polysaccharid umgeben sind, wie mit einem Tuschefärbemittel bestimmt, mit einer Dicke von mindestens 0,5 *µ*m.

5. Verfahren gemäß einem der vorangehenden Ansprüche, worin als Kapselpolysaccharid-bildende Bakterien Milchsäurebakterien, die extrazelluläre Polysaccharide produzieren können, verwendet werden.

6. Verfahren gemäß Anspruch 5, worin Bakterien des Stamms Lactococcus lactis ssp. cremoris CR381, hinterlegt unter der Nummer CBS 102351, verwendet werden.

7. Verfahren gemäß einem der vorangehenden Ansprüche zur Herstellung von Käse vom Gouda-Typ.

8. Hart- oder Halbhartkäse, erhältlich durch ein Verfahren gemäß einem der Ansprüche 1 bis 7.

9. Verwendung von Kapselpolysaccharid-bildenden Bakterien, die bei der Herstellung von Hart- oder Halbhartkäse abgetötet wurden, zum Erhalt eines gleichmäßigen Konsistenz.

10. Verwendung gemäß Anspruch 9, ohne daß dabei zusätzliche Feuchtebindung auftritt.

## Revendications

1. Procédé de préparation d'un fromage de type dur ou semi-dur, dans lequel des bactéries produisant des polysaccharides capsulaires, lesquelles bactéries Sont détruites, sont introduites dans le lait de fromagerie.

2. Procédé selon la revendication 1, dans lequel le levain utilisé est basé sur un levain mésophile traditionnel pour le fromage de type dur ou semi-dur.

3. Procédé selon l'une quelconque des revendications précédentes, dans lequel les bactéries produisant des polysaccharides capsulaires sont ajoutées au lait de fromagerie dans une quantité d'au moins 0,2 % en poids, préférentiellement dans une quantité comprise entre 0,4 et 5 % en poids, sur la base du lait de fromagerie.

4. Procédé selon l'une quelconque des revendications précédentes, dans lequel les bactéries produisant des polysaccharides capsulaires sont entourées d'une couche de polysaccharides, déterminée par coloration à l'encre de Chine, d'une épaisseur d'au moins 0,5 micromètre.

5. Procédé selon l'une quelconque des revendications précédentes, dans lequel des bactéries lactiques capables de produire des polysaccharides extracellulaires sont utilisées comme bactéries produisant des polysaccharides capsulaires.

6. Procédé selon la revendication 5, dans lequel des bactéries de la souche *Lactococcus lactis ssp. cremoris* CR381, enregistrées sous le numéro CBS 102351, sont utilisées.

7. Procédé selon l'une quelconque des revendications précédentes, pour la préparation de fromage de type Gouda.

8. Fromage de type dur ou semi-dur, pouvant être obtenu par le procédé selon l'une quelconque des revendications 1 à 7.

9. Utilisation de bactéries produisant des polysaccharides capsulaires ayant été détruites dans la fabrication de fromage de type dur ou semi-dur pour l'obtention d'une consistance lisse.

10. Utilisation selon la revendication 9, sans qu'une fixation d'humidité supplémentaire n'ait lieu.
